# EUROPEAN PATENT APPLICATION

(11) **EP 4 819 498 A1**
(43) Date of publication of application: **07.10.2026**
(21) Application number: 25861688.7
(22) Date of filing: 12.11.2025
(51) Int. Cl.: H04B 1/50, H04B 7/185, G01S 19/32

(54) **ELECTRONIC DEVICE FOR PERFORMING SATELLITE COMMUNICATION AND GLOBAL NAVIGATION SATELLITE SYSTEM COMMUNICATION**

(30) Priority: 16.12.2024 KR 20240187323; 26.02.2025 KR 20250025419
(71) Applicant: Samsung Electronics Co., Ltd, Suwon-si, Gyeonggi-do 16677 (KR)
(72) Inventor: AN, Yongjun, Suwon-si, Gyeonggi-do 16677 (KR); RYU, Gyeonghun, Suwon-si, Gyeonggi-do 16677 (KR)
(74) Representative: HGF
(86) International application number: PCT/KR2025/018647
(87) International publication number: WO 2026/134684

(57) **Abstract**

According to an embodiment, an electronic device includes at least one processor including processing circuitry, a radio frequency (RF) transceiver coupled with the at least one processor, a radio frequency frontend (RFFE) circuit coupled with the RF transceiver, an antenna, and extraction circuitry disposed between the RFFE circuit and the antenna. The extraction circuitry is configured to pass through signals obtained from the RFFE circuit, and among the signals received through the antenna, extract signals of a receiving frequency range among a first frequency band for satellite communication and a second frequency band for global navigation satellite system (GNSS) communication. The electronic device includes separation circuitry for separating, among the signals obtained from the extraction circuitry, the signals of the receiving frequency range of the first frequency band and the signals of the second frequency band.

## Description

### [Technical Field]

The following descriptions relate to an electronic device for performing satellite communication and global navigation satellite system communication.

### [Background Art]

A satellite communication service may be provided through a communication satellite. Unlike various cases involving a 4^{th} generation (4G) network system and/or a 5^{th} generation (5G) network system in which a wireless communication is performed through a base station, since satellite communication may be performed through the communication satellite, the satellite communication service may be performed without being limited to a geographic location.

The information described above may be provided as a related art for a purpose of helping understanding of the present disclosure. No claim or determination is raised as to whether any of the above-described descriptions may be applied as a prior art related to the present disclosure.

### [Disclosure]

### [Technical Solution]

According to an embodiment, an electronic device may include at least one processor including processing circuitry, a radio frequency (RF) transceiver coupled with the at least one processor, a radio frequency frontend (RFFE) circuit coupled with the RF transceiver, an antenna, and extraction circuitry disposed between the RFFE circuit and the antenna. The extraction circuitry may be configured to pass through signals obtained from the RFFE circuit, and among signals received through the antenna, extract signals of a receiving frequency range among a first frequency band for satellite communication and a second frequency band for global navigation satellite system (GNSS) communication. The electronic device may include separation circuitry for separating, among the signals obtained from the extraction circuitry, the signals of the receiving frequency range of the first frequency band and the signals of the second frequency band.

According to an embodiment, an electronic device may include at least one processor including processing circuitry, a radio frequency (RF) transceiver coupled with the at least one processor, a radio frequency frontend (RFFE) circuit coupled with the RF transceiver, and an antenna. The RFFE circuit may include extraction circuitry disposed between the RFFE circuit and the antenna. The extraction circuitry may be configured to pass through signals transmitted through the antenna, and among signals received through the antenna, extract signals of a receiving frequency range among a first frequency band for satellite communication and a second frequency band for global navigation satellite system (GNSS) communication. The RFFE circuit may include separation circuitry for separating, among the signals obtained from the extraction circuitry, the signals of the receiving frequency range of the first frequency band and the signals of the second frequency band.

### [Description of the Drawings]

FIG. 1 is a block diagram of an electronic device in a network environment according to various embodiments.
FIG. 2A illustrates an example of an electronic device according to an embodiment.
FIG. 2B illustrates an example of a first frequency band and a second frequency band according to an embodiment.
FIG. 3A illustrates an example of an electronic device according to an embodiment.
FIG. 3B illustrates an example of an electronic device according to an embodiment.
FIG. 4 illustrates an example of an electronic device according to an embodiment.
FIG. 5A illustrates an example of separation circuitry according to an embodiment.
FIG. 5B illustrates an example of separation circuitry according to an embodiment.
FIG. 6 illustrates an example of a first frequency band, a second frequency band, and a pass band of extraction circuitry, according to an embodiment.
FIG. 7 illustrates a flowchart of an operation of an electronic device according to an embodiment.

### [Mode for Invention]

Hereinafter, an embodiment of the present disclosure will be described in detail with reference to a drawing so that it may be easily implemented by those having ordinary knowledge in the art to which the present disclosure belongs. However, the present disclosure may be implemented in various different forms, and is not limited to the embodiment described herein. In association with a description of the drawing, the same or similar reference numerals may be used for the same or similar components. In addition, in the drawing and the associated description, a description of a well-known function and configuration may be omitted for clarity and brevity.

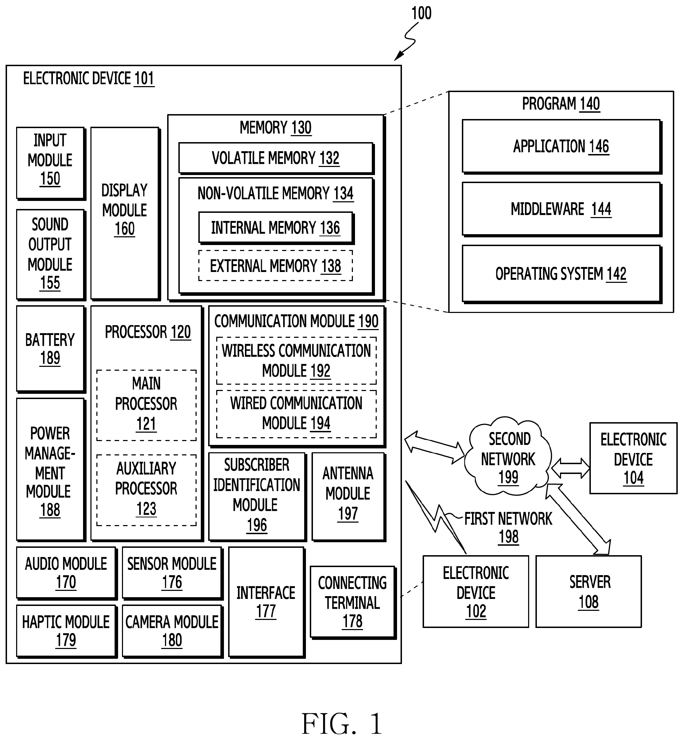

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The number of processors 120 may be one or more. For example, the processor 120 may have a structure of a multi-core processor such as a dual core, a quad core, or a hexa core.

The processor 120 may control operations of the electronic device 101 by executing instructions stored in the memory 130. For example, the processor 120 may correspond to a plurality of processors that divide a plurality of operations among processors and collectively perform the operations.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, the electronic device (e.g., the electronic device 101 of FIG. 1) may perform satellite communication and/or global navigation satellite system (GNSS) communication. For example, the electronic device may include a component (e.g., an RFFE circuit) for the satellite communication and/or the GNSS communication. The satellite communication may be performed in a first frequency band. The GNSS communication may be performed in a second frequency band. The electronic device may perform the GNSS communication through the second frequency band while performing the satellite communication through the first frequency band. In the specification below, the electronic device for performing the satellite communication and the GNSS communication will be described later.

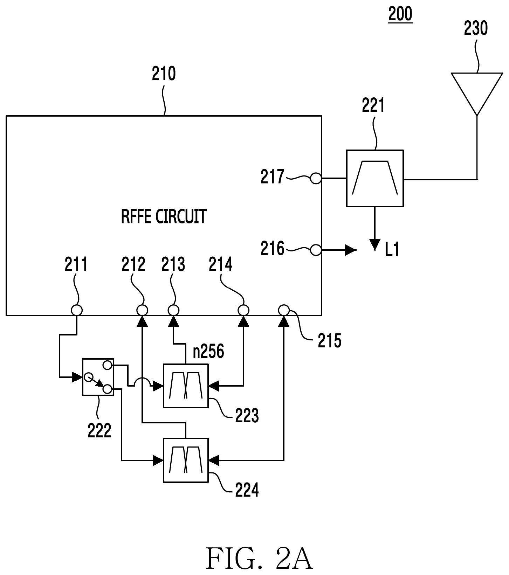

FIG. 2A illustrates an example of an electronic device according to an embodiment.

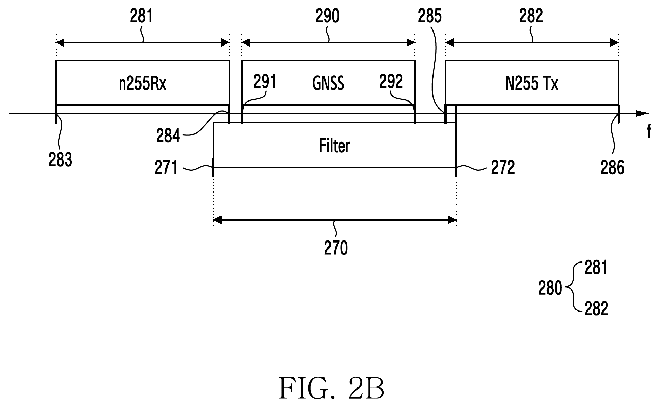

FIG. 2B illustrates an example of a first frequency band and a second frequency band according to an embodiment.

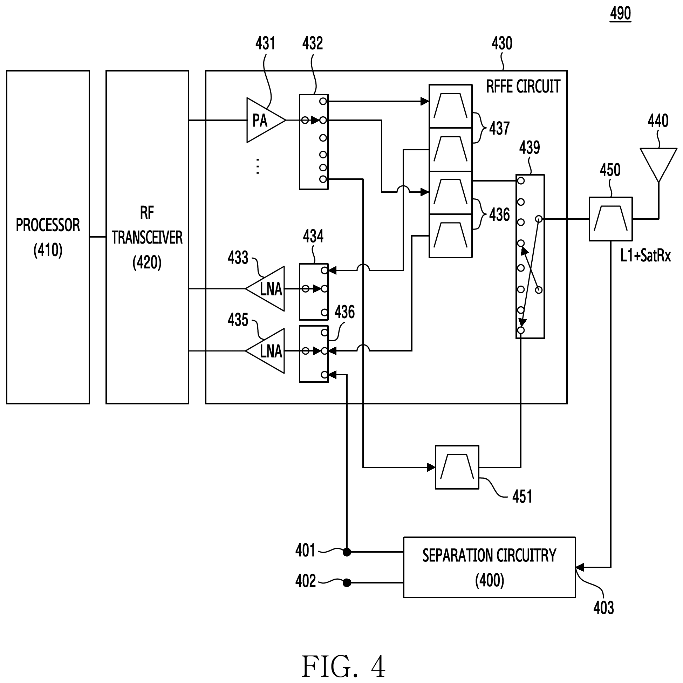

Referring to FIGS. 2A and 2B, an electronic device 200 may include an RFFE circuit 210, switch circuitry 222, extraction circuitry 221, a filter 223, a filter 224, and/or an antenna 230. Components illustrated in FIG. 2A may be used for performing satellite communication and GNSS communication. Although not illustrated, the electronic device 200 may further include a processor (e.g., a processor 410 of FIG. 4) and/or an RF transceiver (e.g., an RF transceiver 420 of FIG. 4). The switch circuitry 222 may be controlled by at least one of the processor and/or the RF transceiver.

Referring to FIG. 2B, the satellite communication may be performed in a first frequency band 280, which may comprise a plurality of frequency bands (e.g. separated by a frequency range). The GNSS communication may be performed in a second frequency band 290. For example, the first frequency band 280 may include a receiving frequency range 281 and a transmitting frequency range 282. The receiving frequency range 281 may be set from a frequency 283 (e.g. a lower boundary) to a frequency 284 (e.g. an upper boundary). The transmitting frequency range 282 may be set from a frequency 285 (e.g. a lower boundary) to a frequency 286 (e.g. an upper boundary). As an example, the receiving frequency range 281 may be set from 1525 [MHz] to 1559 [MHz]. The transmitting frequency range 282 may be set from 1626.5 [MHz] to 1660.5 [MHz]. For example, the first frequency band 280 may be referred to as a B255 or a n255 band in a 3GPP standard. The receiving frequency range 281 of the first frequency band 280 may be referred to as a downlink (DL) band. The transmitting frequency range 282 of the first frequency band 280 may be referred to as an uplink (UL) band.

For example, the second frequency band 290 may be set from a frequency 291 (e.g. a lower boundary) to a frequency 292 (e.g. an upper boundary). As an example, the second frequency band 290 may be set from 1565.42 [MHz] to 1585.42 [MHz]. The second frequency band 290 may be referred to as an L1 band. As an example, the second frequency band 290 may be set from 1560.42 [MHz] to 1590.42 [MHz]. The second frequency band 290 may be referred to as an E1 band.

Referring back to FIG. 2A, the RFFE circuit 210 may include a plurality of ports. For example, the RFFE circuit 210 may include a port 211, a port 212, a port 213, a port 214, a port 215, a port 216, and a port 217. For example, the port 216 may be used to output a signal (e.g., a sounding reference signal (SRS)) of a band (e.g., an N41 band) for a communication network. For example, the port 216 may be used for another frequency band distinguished from the frequency bands (e.g., the first frequency band 280 and the second frequency band 290) described above.

For example, the port 211 may be used to output a signal of a midband (MB). The port 211 may be connected to the switch circuitry 222. The signal of the MB may be provided to the switch circuitry 222. The electronic device 200 may control a path of the signal of the MB by controlling the switch circuitry 222.

For example, the electronic device 200 may provide a path for transmitting a signal to the filter 223 configured to pass through a signal of an n256 band using the switch circuitry 222. Although not illustrated in FIG. 2B, the n256 band may include a transmitting frequency band from 1980 [MHz] to 2010 [MHz] and a receiving frequency band from 2170 [MHz] to 2200 [MHz]. The signal of the n256 band may be inputted to the port 214. The signal of the n256 band may be transferred from the port 217 to the antenna 230 through the extraction circuitry 221. The signal of the n256 band may be radiated through the antenna 230.

As an example, the electronic device 200 may provide a path for transmitting a signal to the filter 224 configured to pass through a signal of the first frequency band 280 (e.g., the n255 band) using the switch circuitry 222. A signal of the transmitting frequency range 282 of the first frequency band 280 may be inputted to the port 215. The signal of the transmitting frequency range 282 may be transmitted from the port 217 to the antenna 230 through the extraction circuitry 221. The signal of the transmitting frequency range 282 may be radiated through the antenna 230.

For example, the extraction circuitry 221 may be configured to pass through the signal provided to the antenna 230. The extraction circuitry 221 may be configured to obtain a signal of the second frequency band 290 among signal(s) received from the antenna 230 (e.g. signals received by the antenna 230 and input to the extraction circuitry 221). Although not illustrated, the signal of the second frequency band 290 may be provided to circuitry for a signal processing related to GNSS communication. The extraction circuitry 221 may be referred to as a surface acoustic wave (SAW) filter.

According to an embodiment, a signal of the receiving frequency range 281 of the first frequency band 280 received through the antenna 230 may pass through the extraction circuitry 221. In the extraction circuitry 221, since a portion of the receiving frequency range 281 is extracted, the signal of the receiving frequency range 281 (or at least a portion of the signal of the receiving frequency range 281) may not be inputted to the port 217. Accordingly, the signal of the receiving frequency range 281 may not be provided to the filter 224 through the port 215.

According to an embodiment, a signal of a receiving frequency range of the n256 band received through the antenna 230 may pass through the extraction circuitry 221. The signal of the receiving frequency range of the n256 band may be inputted to the port 217. The signal of the receiving frequency range of the n256 band may be provided to the filter 223 through the port 214. The signal of the receiving frequency range of the n256 band passing through the filter 223 may be provided to the port 213. Although not illustrated, the signal of the receiving frequency range of the n256 band inputted to the port 213 may be processed by the RFFE circuit 210, the RF transceiver, and/or the processor.

Referring to FIG. 2B, a pass band (or an extraction band) of the extraction circuitry 221 may correspond to a frequency band 270. The frequency band 270 may be set from a frequency 271 to a frequency 272. For example, the signal of the second frequency band 290 passing through the extraction circuitry 221 may be provided to the circuitry for the signal processing related to the GNSS communication. In a case that the signal of the second frequency band 290 includes noise of a reference magnitude, the electronic device 200 may not demodulate the signal of the second frequency band 290.

According to an embodiment, a gap between the frequency 284 and the frequency 291 may be small to filter. For example, the gap may not be large enough and as a result the pass band may encompasse frequency 284. That is, the frequency 271 may be smaller than the frequency 284. The pass band (or the extraction band) of the extraction circuitry 221 may overlap the receiving frequency range 281 of the first frequency band 280. Accordingly, while receiving a signal through the second frequency band 290, the electronic device 200 may not receive a signal through the first frequency band 280. As an example, the electronic device 200 may not demodulate a signal of the first frequency band 280 received while receiving a signal through the second frequency band 290.

For example, a gap between the frequency 292 and the frequency 285 may be small to filter. For example, the gap may not be large enough and as a result the pass band may encompasse frequency 285. That is, the frequency 272 may be greater than the frequency 285. The pass band (or the extraction band) of the extraction circuitry 221 may overlap the transmitting frequency range 282 of the first frequency band 280. Accordingly, while transmitting a signal through the first frequency band 280 using the antenna 230, the electronic device 200 may not receive a signal through the second frequency band 290 using the antenna 230. As an example, the electronic device 500 may not demodulate a signal of the second frequency band 290 received while transmitting a signal through the first frequency band 280. A high-quality filter, and so a more expensive filter, may be used so that the pass band (or extraction band) does not overlap with the transmitting frequency range 282. However, filtering the receiving frequency range 281 in a similar manner is not also possible (e.g. a filter with a pass band that does not overlap with the transmitting frequency range 282 and the receiving frequency range 281 is not available. Accordingly, there remains an issue that, even with a more expensive/high-quality filter, while receiving a signal through the second frequency band 290, the electronic device 200 may not receive a signal through the first frequency band 280.

As described above, the electronic device 200 may not simultaneously perform the satellite communication and the GNSS communication through the antenna 230. In the specification below, a specific example of the electronic device for simultaneously performing the satellite communication and the GNSS communication will be described.

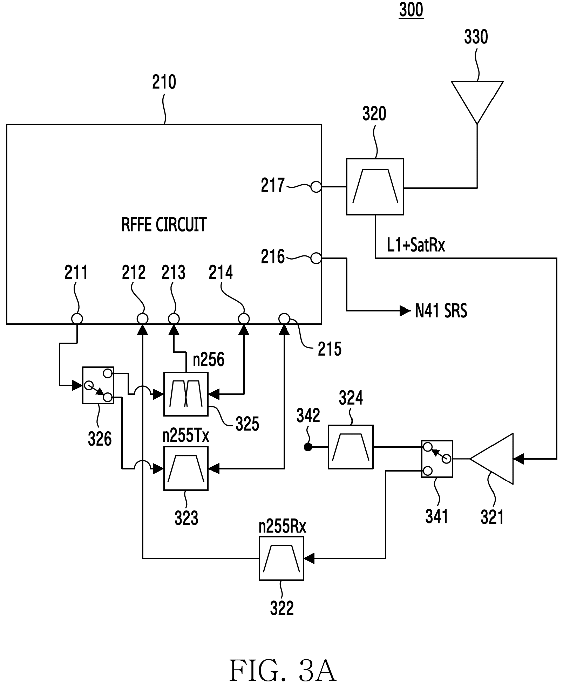

FIG. 3A illustrates an example of an electronic device according to an embodiment.

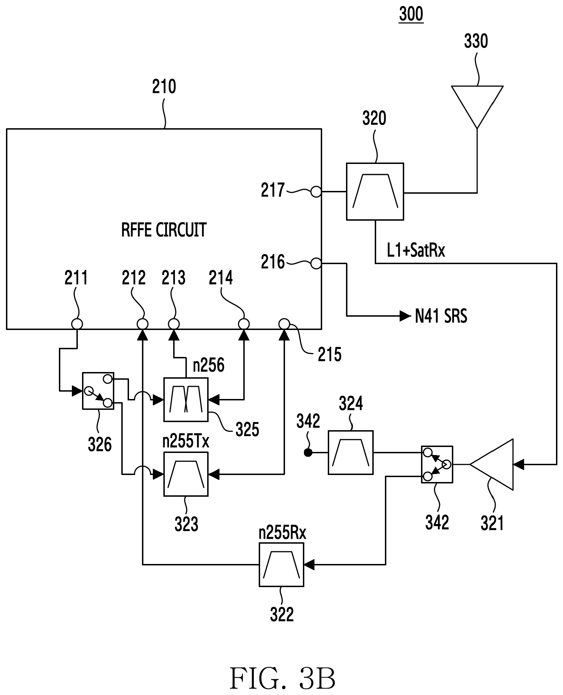

FIG. 3B illustrates an example of an electronic device according to an embodiment.

Referring to FIGS. 3A and 3B, an electronic device 300 may simultaneously perform satellite communication and GNSS communication. For example, while transmitting a signal of a first frequency band 280, the electronic device 300 may receive a signal of a second frequency band 290. While receiving a signal of the second frequency band 290, the electronic device 300 may receive a signal of the first frequency band 280.

According to an embodiment, a transmitting signal of the first frequency band 280 may be provided from a port 211 to switch circuitry 326. The transmitting signal of the first frequency band 280 may be provided from the switch circuitry 326 to a filter 323. The filter 323 may be configured to pass through a signal of a transmitting frequency range 282 of the first frequency band 280. The transmitting signal of the first frequency band 280 may be provided from the filter 323 to a port 215 of an RFFE circuit 210. The transmitting signal of the first frequency band 280 may be provided from the port 215 of the RFFE circuit 210 to a port 217 of the RFFE circuit 210. The transmitting signal of the first frequency band 280 may be provided to an antenna 330 through extraction circuitry 320. The transmitting signal of the first frequency band 280 may be radiated through the antenna 330. According to an embodiment, the switch circuitry 326 may not be included in the electronic device 300.

According to an embodiment, a transmitting signal of an n256 band may be provided from the port 211 to the switch circuitry 326. The transmitting signal of the n256 band may be provided from the switch circuitry 326 to a filter 325. The filter 325 may be configured to pass through a signal of a transmitting frequency range of the n256 band. The filter 325 may correspond to the filter 223 of FIG. 2A. The transmitting signal of the n256 band may be provided from the filter 325 to a port 214 of the RFFE circuit 210. The transmitting signal of the n256 band may be provided from the port 214 of the RFFE circuit 210 to the port 217 of the RFFE circuit 210. The transmitting signal of the n256 band may be provided to the antenna 330 through the extraction circuitry 320. The transmitting signal of the n256 band may be radiated through the antenna 330. For example, the n256 band may be distinguished from a frequency band (e.g., the second frequency band 290) extracted from the extraction circuitry 320. Accordingly, the transmitting signal of the n256 band may not be affected by a characteristic of the extraction circuitry 320.

According to an embodiment, the extraction circuitry 320 may be configured to pass through signals obtained from the RFFE circuit 210. The extraction circuitry 320 may be configured to extract signals of a receiving frequency range 281 among the first frequency band 280 and a second frequency band 290. The signals of the receiving frequency range 281 and the second frequency band 290 may be provided to a low noise amplifier 321. The signals of the receiving frequency range 281 and the second frequency band 290 may be provided from the low noise amplifier 321 to switch circuitry 341 of FIG. 3A or a divider 342 (or a splitter 342) of FIG. 3B. For example, as described above, a filter having a pass band which does not overlap with the transmitting frequency range 282 (e.g. n255Tx) may be available. Such a filter may be included in extraction circuitry 320 to allow for extracting signals of a second frequency band 290 and a receiving frequency range 281 among the first frequency band 280. In various examples, for certain frequencies (e.g. for a certain frequency range where the receiving frequency range 281 and the second frequency band 290 overlap), the signals which are extracted from signals received through the antenna, which include signals of the second frequency band 290 and signals of the receiving frequency range 281 among the first frequency band 280, will include a component corresponding to a signal of the second frequency band 290 and a component corresponding to a signal of the receiving frequency range 281. That is, a portion of a received signal at such certain frequencies may correspond to a combination (e.g. combined amplitude) of the two separate signals (i.e. one signal associated with the first frequency band 280 and another signal associated with the second frequency band 290).

For example, in a case that the electronic device 300 includes the switch circuitry 341, as illustrated in FIG. 3A, the electronic device 300 (or a processor of the electronic device 300 and an RF transceiver of the electronic device 300) may provide the signals of the receiving frequency range 281 and the second frequency band 290 to one of a filter 324 and a filter 322, by controlling the switch circuitry 341.

For example, in a case that the electronic device 300 includes the divider 342 as illustrated in FIG. 3B, the electronic device 300 (or the processor of the electronic device 300 and the RF transceiver of the electronic device 300) may provide the signals of the receiving frequency range 281 and the second frequency band 290 to both the filter 324 and the filter 322 through the divider 342.

According to an embodiment, the signals of the receiving frequency range 281 and the second frequency band 290 may be provided from the switch circuitry 341 of FIG. 3A or the divider 342 of FIG. 3B to the filter 324. The filter 324 may be configured to pass through the signal of the second frequency band 290. The signal of the second frequency band 290 passing through the filter 324 may be provided to circuitry (not illustrated) for a signal processing related to the GNSS communication. The signals of the receiving frequency range 281 and signals of the second frequency band 290 may not interfere with one another. For example, in a case of the second frequency band 290 corresponding to a GPS frequency band and the receiving frequency range 281 corresponding to the n255Rx frequency band, the signals of one band may not interfere with the signals of the other band. The switch circuitry 341 of FIG. 3A or the divider 342 of FIG. 3B, e.g. in combination with the filter 324 and/or the filter 322, may separate the signals according to their frequency band.

According to an embodiment, the signals of the receiving frequency range 281 and the second frequency band 290 may be provided from the switch circuitry 341 of FIG. 3A or the divider 342 of FIG. 3B to the filter 322. The filter 322 may be configured to pass through the signal of the receiving frequency range 281 among the first frequency band 280. The signal of the receiving frequency range 281 passing through the filter 322 may be provided to a port 212 of the RFFE circuit 210. The signal of the receiving frequency range 281 inputted to the port 212 may be processed by the RFFE circuit 210, the RF transceiver, and/or the processor.

As illustrated in FIGS. 3A and 3B, the electronic device 300 may simultaneously receive a receiving signal of the first frequency band 280 and a receiving signal of the second frequency band 290, and may distinguish the receiving signal of the first frequency band 280 and the receiving signal of the second frequency band 290 using the filter 324 and the filter 322. For example, the extraction circuitry 320 may include an extractor or a multiplexer. For example, the two components referred to in an example above may be separated, as part of separating the receiving signal of the first frequency band 280 and the receiving signal of the second frequency band 290. In order to support a transmitting signal of the first frequency band 280 in a cell band, the extraction circuitry 320 may be configured based on an acoustic filter of a thinfilm SAW and/or a bulk acoustic wave (BAW) or higher. For example, such a filter can filter out the transmitting frequency range 282 of the first frequency band 280.

FIG. 4 illustrates an example of an electronic device according to an embodiment.

Referring to FIG. 4, an electronic device 490 may include a processor 410, an RF transceiver 420, an RFFE circuit 430, and/or an antenna 440. The RFFE circuit 430 may correspond to the RFFE circuit 210 of FIGS. 3A and 3B. The antenna 440 may correspond to the antenna 330 of FIGS. 3A and 3B. Although not illustrated, the electronic device 490 may further include memory. For example, in the memory of the electronic device 490, one or more instructions (or commands) indicating a calculation and/or an operation to be performed on data by the processor 410 of the electronic device 490 may be stored. A set of the one or more instructions may be referred to as a firmware, an operating system, a process, a routine, a subroutine, and/or an application. For example, the electronic device 490 and/or the processor 410 may perform, when a set of a plurality of instructions distributed in a form of the operating system, the firmware, a driver, and/or the application is executed, at least one of operations according to an embodiment described below. Hereinafter, the application being installed in the electronic device 490 may mean that the one or more instructions provided in the form of the application are stored in the memory, and that the one or more applications are stored in an executable format (e.g., a file with an extension preset by the operating system of the electronic device 490) by the processor 410. As an example, the application may include a program associated with a service provided to a user and/or a library.

For example, the processor 410 may include at least one of an application processor (AP) (e.g., the main processor 121 of FIG. 1) or a communication processor (CP) (e.g., the auxiliary processor 123 of FIG. 1). For example, the processor 410 may include the AP and the CP. For example, the processor 410 may include the AP. For example, the processor 410 may include the CP. The processor 410 may control the RF transceiver 420 through a control interface. The processor 410 may control the RF transceiver 420 so that a signal is transmitted through the antenna 440. The processor 410 may control the RF transceiver 420 so that the signal is received.

For example, the RF transceiver 420 may be implemented as a single chip (e.g., an RFIC chip) or as a portion of a single package. The RF transceiver 420 may include a digital to analog converter (DAC) for converting a digital signal into an analog signal. The RF transceiver 420 may include a mixer and an oscillator (e.g., a local oscillator (LO) or a voltage controlled oscillator (VCO)) for an up-conversion. The RF transceiver 420 may convert a baseband signal generated by the processor 410 into an RF signal. The RF transceiver 420 may provide the RF signal to the RFFE circuit 430. The RF transceiver 420 may include an analog to digital converter (ADC) for converting an analog signal into a digital signal. The RF transceiver 420 may include a mixer and an oscillator for a down-conversion. The RF transceiver 420 may convert an RF signal received from the antenna 440 into a baseband signal to be processed by the processor 410. The RF transceiver 420 may include one or more transmitting ports. The RF transceiver 420 may include one or more receiving ports.

According to an embodiment, the RFFE circuit 430 may include a power amplifier 431, switch circuitry 432, an LNA (low noise amplifier) 433, an LNA 435, switch circuitry 434, switch circuitry 436, a duplexer 437, a duplexer 438, and switch circuitry 439.

For example, the RF transceiver 420 may provide an RF signal of a third frequency band for a communication network (e.g., a long term evolution (LTE) network, or a new radio (NR) network, or a future, e.g. beyond 5G (B5G) or 6G, network) to the RFFE circuit 430. The RF signal of the third frequency band may be provided to the switch circuitry 432 through a power amplifier (e.g., the power amplifier 431). The RF signal of the third frequency band may be provided from the switch circuitry 432 to one of the duplexer 437 and the duplexer 438. The duplexer 437 may be configured to pass through a signal of a B1 band of the third frequency band. The duplexer 438 may be configured to pass through a signal of a B3 band of the third frequency band. The signal of the third frequency band may be provided from one of the duplexer 437 and the duplexer 438 to the switch circuitry 439. The signal of the third frequency band may be provided from the switch circuitry 439 to extraction circuitry 450. The extraction circuitry 450 (which may also be referred to more generally as "circuitry") may correspond to the extraction circuitry 320 of FIGS. 3A and 3B. The signal of the third frequency band may be provided from the extraction circuitry 450 to the antenna 440. The signal of the third frequency band may be radiated through the antenna 440.

For example, the signal of the third frequency band may be obtained through the antenna 440. The signal of the third frequency band may be provided from the antenna 440 to the extraction circuitry 450. The signal of the third frequency band may be provided to the switch circuitry 439 of the RFFE circuit 430 through the extraction circuitry 450. The signal of the third frequency band may be provided from the switch circuitry 439 to one of the duplexer 437 and the duplexer 438. The signal of the third frequency band may be provided from one of the duplexer 437 and the duplexer 438 to one of the switch circuitry 434 and the switch circuitry 436. The signal of the third frequency band may be provided to the RF transceiver 420 through one of a low noise amplifier 433 and a low noise amplifier 435. The signal of the third frequency band may be processed by the RF transceiver 420 and/or the processor 410.

For example, the RF transceiver 420 may provide a transmitting signal (or a transmitting RF signal) of a first frequency band 280 to the RFFE circuit 430. The transmitting signal of the first frequency band 280 may be provided to the switch circuitry 432 through a power amplifier (e.g., the power amplifier 431). The transmitting signal of the first frequency band 280 may be provided from the switch circuitry 432 to a filter 451. The filter 451 may be configured to pass through a signal of a transmitting frequency range 282 of the first frequency band 280. The filter 451 may correspond to the filter 323 of FIGS. 3A and 3B. The transmitting signal of the first frequency band 280 passing through the filter 451 may be provided to the switch circuitry 439. The transmitting signal of the first frequency band 280 may be provided from the switch circuitry 439 to the extraction circuitry 450. The extraction circuitry 450 may be configured to pass through signals obtained from the RFFE circuit 430. The transmitting signal of the first frequency band 280 passing through the extraction circuitry 450 may be provided to the antenna 440. The transmitting signal of the first frequency band 280 may be radiated through the antenna 440.

For example, the signals of the first frequency band 280 and the second frequency band 290 may be obtained through the antenna 440. The signals of the first frequency band 280 and the second frequency band 290 may be provided to the extraction circuitry 450 through the antenna 440. The extraction circuitry 450 may be configured to extract signals of a receiving frequency range 281 among the first frequency band 280 and the second frequency band 290. The signals of the first frequency band 280 and the second frequency band 290 may be provided to separation circuitry 400 through the extraction circuitry 450. The signals of the first frequency band 280 and the second frequency band 290 may be inputted to a port 403 of the separation circuitry 400.

The signals of the first frequency band 280 and the second frequency band 290 may be divided into a signal (or a receiving signal) of the first frequency band 280 and a signal of the second frequency band 290, through the separation circuitry 400. The signal of the first frequency band 280 may be provided to the RFFE circuit 430 through a port 401. The signal of the second frequency band 290 may be provided to circuitry (not illustrated) for a signal processing related to GNSS communication through a port 402.

For example, the signal of the first frequency band 280 may be provided to the switch circuitry 436. The signal of the first frequency band 280 may be provided from the switch circuitry 436 to the low noise amplifier 435. The signal of the first frequency band 280 may be provided from the low noise amplifier 435 to the RF transceiver 420. The signal (or the receiving signal) of the first frequency band 280 may be processed by the RF transceiver 420 and/or the processor 410.

The electronic device 490 described above may simultaneously receive a signal of the first frequency band 280 and a signal of the second frequency band 290 and distinguish the signals through the separation circuitry 400. Accordingly, while receiving the signal of the first frequency band 280, the electronic device 490 may receive the signal of the second frequency band 290. In addition, since a path along which the signal of the first frequency band 280 is transmitted and a path along which the signal of the second frequency band 290 is distinguished are different, the electronic device 490 may receive the signal of the second frequency band 290 while transmitting the signal of the first frequency band 280.

In FIG. 4, an example in which the extraction circuitry 450, the filter 451, and the separation circuitry 400 are distinguished from the RFFE circuit 430 is illustrated, but it is not limited thereto. At least some or all of the extraction circuitry 450, the filter 451, and the separation circuitry 400 may be included in the RFFE circuit 430.

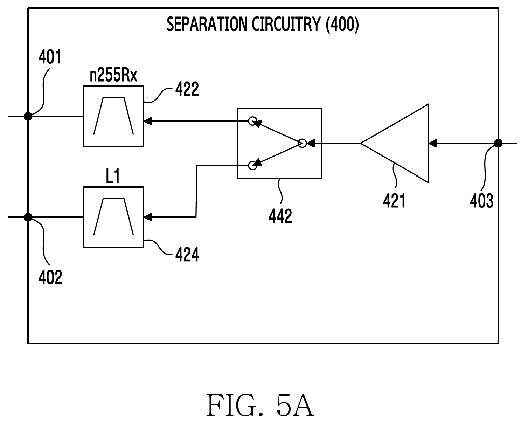

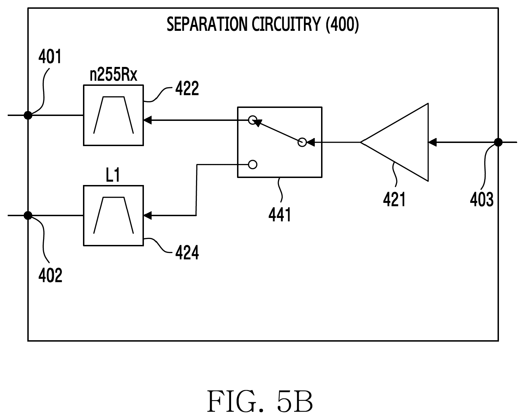

A specific example of the separation circuitry 400 will be described in FIGS. 5A and 5B below.

FIG. 5A illustrates an example of separation circuitry according to an embodiment.

FIG. 5B illustrates an example of separation circuitry according to an embodiment.

Referring to FIG. 5A, separation circuitry 400 may include a low noise amplifier 421, a divider 442 (or a splitter 442), a filter 422, and/or a filter 424. For example, the separation circuitry 400 may receive signals of a first frequency band 280 and a second frequency band 290 through a port 403. The signals of the first frequency band 280 and the second frequency band 290 may be amplified through the low noise amplifier 421. The low noise amplifier 421 may be disposed to reduce a loss due to a signal separation process. The signals of the first frequency band 280 and the second frequency band 290 may be provided from the low noise amplifier 421 to the divider 442.

For example, the divider 442 may be configured to separate an inputted signal according to a preset magnitude ratio. For example, the divider 442 may be configured to branch an input path into a first branch and a second branch. The filter 422 may be connected to the first branch of the divider 442. The filter 424 may be connected to the second branch of the divider 442.

For example, the signals of the first frequency band 280 and the second frequency band 290 may be provided to the filter 422. The filter 422 may be configured to pass through a signal of a receiving frequency range 281 of the first frequency band 280. The signal of the first frequency band 280 may pass through the filter 422. The signal of the first frequency band 280 may be outputted through a port 401.

For example, the signals of the first frequency band 280 and the second frequency band 290 may be provided to the filter 424. The filter 424 may be configured to pass through the signal of the second frequency band 290. The signal of the second frequency band 290 may pass through the filter 424. The signal of the second frequency band 290 may be outputted through a port 402.

Referring to FIG. 5B, separation circuitry 400 may include a low noise amplifier 421, switch circuitry 441, a filter 422, and/or a filter 424. For example, the separation circuitry 400 may receive signals of a first frequency band 280 and a second frequency band 290 through a port 403. The signals of the first frequency band 280 and the second frequency band 290 may be amplified through the low noise amplifier 421. The low noise amplifier 421 may be disposed to reduce a loss due to a signal separation process. The signals of the first frequency band 280 and the second frequency band 290 may be provided from the low noise amplifier 421 to the switch circuitry 441.

For example, the switch circuitry 441 may be configured to connect an input path to one of a first end and a second end. The filter 422 may be connected to the first end of the switch circuitry 441. The filter 424 may be connected to the second end of the switch circuitry 441.

For example, the signals of the first frequency band 280 and the second frequency band 290 may be provided to the filter 422. The filter 422 may be configured to pass through the signal of the receiving frequency range 281 of the first frequency band 280. The signal of the first frequency band 280 may pass through the filter 422. The signal of the first frequency band 280 may be outputted through the port 401.

For example, the signals of the first frequency band 280 and the second frequency band 290 may be provided to the filter 424. The filter 424 may be configured to pass through the signal of the second frequency band 290. The signal of the second frequency band 290 may pass through the filter 424. The signal of the second frequency band 290 may be outputted through the port 402.

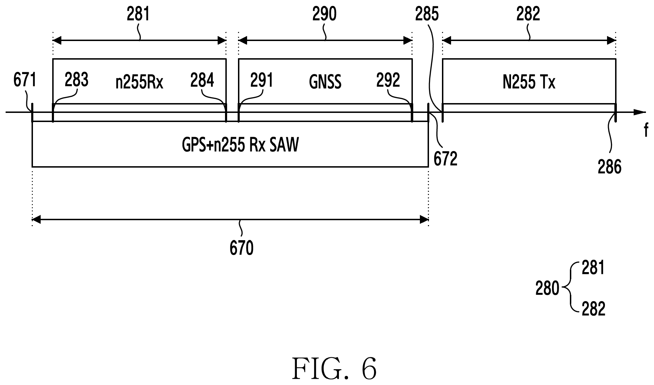

FIG. 6 illustrates an example of a first frequency band, a second frequency band, and a pass band of extraction circuitry according to an embodiment.

Referring to FIG. 6, a first frequency band 280 may correspond to the first frequency band 280 of FIG. 2B. A second frequency band 290 may correspond to the second frequency band 290 of FIG. 2B.

According to an embodiment, a pass band of the extraction circuitry 450 of FIG. 4 may correspond to a frequency band 670. For example, the frequency band 670 may include a receiving frequency range 281 of the first frequency band 280 and the second frequency band 290.

For example, extraction circuitry 450 may be configured to extract signals of the receiving frequency range 281 of the first frequency band 280 and the second frequency band 290, among signals received through an antenna 440. The extraction circuitry 450 may be configured to extract signals having a frequency in the frequency band 670 among the signals received through the antenna 440.

For example, the frequency band 670 may be set from a frequency 671 to a frequency 672. The frequency 671 may be set smaller than a frequency 283 of the receiving frequency range 281. The frequency 672 may be set greater than a frequency 292 of the second frequency band 290. The frequency 672 may be set smaller than a frequency 285 of a transmitting frequency range 282. In various examples, the frequency band 670 (and/or the pass band of the extraction circuitry 450 of Fig. 4), may be set based on, e.g. to correspond to, a combined frequency range of a satellite communication frequency band and a frequency band associated with GNSS (e.g. a frequency band associated with GPS, a frequency band associated with GLONASS, a frequency band associated with Galileo, a frequency band associated with Beidou, or a frequency band associated with another type of geo-spatial positioning system).

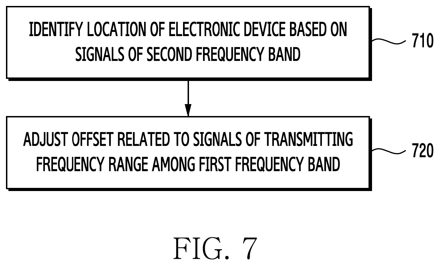

FIG. 7 illustrates a flowchart of an operation of an electronic device according to an embodiment. In an embodiment below, each operation may be performed sequentially, but is not necessarily performed sequentially. For example, an order of each operation may be changed, and at least two operations may be performed in parallel.

Referring to FIG. 7, in operation 710, an electronic device 490 (or a processor 410 of the electronic device 490)(e.g. a user equipment (UE)) may identify a location (or approximate location) of the electronic device 490 based on signals of a second frequency band 290. For example, the processor 410 may obtain the signals of the second frequency band 290 using extraction circuitry 450 and/or separation circuitry 400. The processor 410 may identify the location of the electronic device 490 based on the signals of the second frequency band 290.

According to an embodiment, the second frequency band 290 may be used for global navigation satellite system (GNSS) communication. The GNSS communication may include at least one of a global navigation satellite system (GLONASS), a beidou navigation satellite system (hereinafter, "Beidou"), a quasi-zenith satellite system (QZSS), an Indian regional satellite system (IRNSS), or the European global satellite-based navigation system (Galileo), according to a usage region or a bandwidth. For example, the processor 410 may receive the signals of the second frequency band 290 from at least one satellite. The processor 410 may identify a location information of the electronic device 490 based on the signals of the second frequency band 290.

According to an embodiment, while transmitting and/or receiving a signal of a first frequency band 280, the processor 410 may receive the signals of the second frequency band 290 and identify the location information of the electronic device 490. For example, while receiving a signal of a receiving frequency range 281 among the first frequency band 280, the processor 410 may receive the signal of the second frequency band 290. For example, while transmitting a signal of a transmitting frequency range 282 among the first frequency band 280, the processor 410 may receive the signal of the second frequency band 290.

For example, the first frequency band 280 may be used for satellite communication. For example, the satellite communication may be referred to as narrow band non-terrestrial network (NB NTN) communication (or NR NTN communication).

For example, the second frequency band 290 may be set between the transmitting frequency range 282 of the first frequency band 280 and the receiving frequency range 281 of the first frequency band 280.

In operation 720, the processor 410 may adjust an offset related to signals of the transmitting frequency range 282 among the first frequency band 280. For example, the offset may be referred to as a timing advance (TA). The processor 410 may change the TA for transmitting the signals of the transmitting frequency range 282 to a satellite. The processor 410 may change the TA to transmit the signals of the transmitting frequency range 282 in a time resource preset according to a UL scheduling information received from the satellite.

For example, the processor 410 may adjust the offset related to the signals of the transmitting frequency range 282 based on identifying that the location of the electronic device 490 is changed based on the signal of the second frequency band 290, or based on identifying that the location of the electronic device 490 relative to the satellite is changed based on the signal of the second frequency band 290. As an example, the processor 410 may adjust the offset related to the signals of the transmitting frequency range 282 based on a preset time unit (e.g., 0.52 [ micro second (us or µs)]. According to an embodiment, the processor 410 may adjust the offset based on a distance between a location of the satellite and the location of the electronic device 490 (e.g. based on path length). According to an embodiment, the processor 410 may identify whether an obstacle is located in a path between the location of the satellite and the location of the electronic device 490. The processor 410 may adjust the offset based on whether the obstacle is located in the path between the location of the satellite and the location of the electronic device 490.

According to an embodiment, an electronic device (e.g., the electronic device 490) may include at least one processor (e.g., the processor 410) including processing circuitry, a radio frequency (RF) transceiver (e.g., the RF transceiver 420) coupled with the at least one processor, a radio frequency frontend (RFFE) circuit (e.g., the RFFE circuit 430) coupled with the RF transceiver, an antenna (e.g., the antenna 440), and extraction circuitry (e.g., the extraction circuitry 450) disposed between the RFFE circuit and the antenna. The extraction circuitry may be configured to pass through signals obtained from the RFFE circuit, and among the signals received through the antenna, extract signals of a receiving frequency range (e.g., the receiving frequency range 281) among a first frequency band (e.g., the first frequency band 280) for satellite communication and a second frequency band (e.g., the second frequency band 290) for global navigation satellite system (GNSS) communication. The electronic device may include separation circuitry (e.g., the separation circuitry 400) for separating, among the signals obtained from the extraction circuitry, the signals of the receiving frequency range of the first frequency band and the signals of the second frequency band.

For example, the separation circuitry may include a first filter passing through the signals of the receiving frequency range of the first frequency band, and a second filter passing through the signals of the second frequency band.

For example, the separation circuitry may include a divider branching an input path into a first branch and a second branch. The first filter may be connected to the first branch. The second filter may be connected to the second branch.

For example, the electronic device may include a low noise amplifier disposed between the separation circuitry and the extraction circuitry. The low noise amplifier may be configured to amplify the signals of the receiving frequency range of the first frequency band and the signals of the second frequency band.

For example, the separation circuitry may include switch circuitry for connecting an input path to one of a first end and a second end. The first filter may be connected to the first end. The second filter may be connected to the second end.

For example, the signals obtained from the RFFE circuit may include signals of a transmitting frequency range among the first frequency band.

For example, the electronic device may include a filter for passing through the signals of the transmitting frequency range among the first frequency band.

For example, the RFFE circuit may be configured to output the signals of the transmitting frequency range among the first frequency band and signals of a third frequency band for a communication network, obtained from the filter.

For example, the at least one processor may be configured to identify, based on the signals of the second frequency band, a location of the electronic device, and adjust, based on the location of the electronic device, an offset related to the signals of the transmitting frequency range among the first frequency band. Accordingly, communication issues caused by an error in a timing advance (e.g. poor network performance, such as slow data speed and connection loss, due to a UE transmitted at the wrong time for a base station to correctly receive the transmission etc.) may be mitigated.

For example, the second frequency band may be between the transmitting frequency range of the first frequency band and the receiving frequency range of the first frequency band.

According to an embodiment, an electronic device may include at least one processor including processing circuitry, a radio frequency (RF) transceiver coupled with the at least one processor, a radio frequency frontend (RFFE) circuit coupled with the RF transceiver, and an antenna. The RFFE circuit may include extraction circuitry disposed between the RFFE circuit and the antenna. The extraction circuitry may be configured to pass through signals to be transmitted through the antenna, and among the signals received through the antenna, extract signals of a receiving frequency range among a first frequency band for satellite communication and a second frequency band for global navigation satellite system (GNSS) communication. The RFFE circuit may include separation circuitry for separating, among the signals obtained from the extraction circuitry, the signals of the receiving frequency range of the first frequency band and the signals of the second frequency band.

For example, the separation circuitry may include a first filter passing through the signals of the receiving frequency range of the first frequency band, and a second filter passing through the signals of the second frequency band.

For example, the separation circuitry may include a divider branching an input path into a first branch and a second branch. The first filter may be connected to the first branch. The second filter may be connected to the second branch.

For example, the RFFE circuit may include a low noise amplifier disposed between the separation circuitry and the extraction circuitry. The low noise amplifier may be configured to amplify the signals of the receiving frequency range of the first frequency band and the signals of the second frequency band.

For example, the separation circuitry may include switch circuitry for connecting an input path to one of a first end and a second end. The first filter may be connected to the first end. The second filter may be connected to the second end.

For example, the signals to be transmitted through the antenna may include signals of a transmitting frequency range among the first frequency band.

For example, the RFFE circuit may include a filter for passing through the signals of the transmitting frequency range among the first frequency band.

For example, the RFFE circuit may be configured to output the signals of the transmitting frequency range among the first frequency band and signals of a third frequency band for a communication network, obtained from the filter.

For example, the at least one processor may be configured to identify, based on the signals of the second frequency band, a location of the electronic device, and adjust, based on the location of the electronic device, an offset related to the signals of the transmitting frequency range among the first frequency band.

For example, the second frequency band may be between the transmitting frequency range of the first frequency band and the receiving frequency range of the first frequency band.

According to an example, an electronic device may comprise at least one processor including processing circuitry, a radio frequency, RF, transceiver coupled with the at least one processor, a radio frequency frontend, RFFE, circuit coupled with the RF transceiver, an antenna, first circuitry configured to: pass through signals to be transmitted through the antenna, and among signals received through the antenna, extract signals of a frequency band, wherein the frequency band includes: a receiving frequency range of a first frequency band for satellite communication, and a second frequency band for global navigation satellite system, GNSS, communication, and second circuitry configured to: obtain the extracted signals from the first circuitry, and separate, among the extracted signals, signals of the receiving frequency range of the first frequency band and signals of the second frequency band.

According to an example, the second circuitry may comprise a divider branching an input path into a first branch and a second branch, or switch circuitry for connecting an input path to one of a first branch and a second branch.

According to an example, the second circuitry may comprise a first filter configured to pass through the signals of the receiving frequency range of the first frequency band, and a second filter configured to pass through the signals of the second frequency band. The first filter may be connected to the first branch. The second filter is connected to the second branch.

According to an example, the electronic device may comprise a low noise amplifier, LNA, disposed between the second circuitry and the first circuitry. The LNA may be configured to amplify the signals of the receiving frequency range of the first frequency band and the signals of the second frequency band.

According to an example, the first circuitry may be configured to receive signals of a transmitting frequency range of the first frequency band.

According to an example, the electronic device may comprise a filter for passing through the signals of the transmitting frequency range among the first frequency band.

According to an example, the RFFE circuit may be configured to output the signals of the transmitting frequency range among the first frequency band and signals of a third frequency band for communication network, obtained from the filter.

According to an example, the at least one processor may be configured to identify, based on the signals of the second frequency band, a location of the electronic device, and adjust, based on the location of the electronic device, an offset related to the signals of the transmitting frequency range among the first frequency band.

According to an example, the offset may be a timing advance, The at least one processor may be configured to adjust, based on the location of the electronic device, the timing advance to transmit the signals of the transmitting frequency range in a time resource preset according to uplink scheduling information received by the electronic device.

According to an example, the second frequency band may be between the transmitting frequency range of the first frequency band and the receiving frequency range of the first frequency band.

According to an example, the first circuitry and/or the second circuitry may be included in the RFFE circuit, or the signals passed through to the antenna are received from the RFFE circuit.

According to an example, the first frequency band may be an n255 band or B255 band. The second frequency band may be a L1 band of E1 band. The receiving frequency range may partially overlap with the second frequency band.

According to an example, a method of an electronic device comprising first circuitry configured to pass through signals to be transmitted through an antenna of the electronic device, may comprise, among signals received through the antenna, extracting, by the first circuity, signals of a frequency band, wherein the frequency band includes: a receiving frequency range of a first frequency band for satellite communication, and a second frequency band for global navigation satellite system, GNSS, communication, and separating, by second circuitry configured to obtain the extracted signals from the first circuitry, signals of the receiving frequency range of the first frequency band and signals of the second frequency band from among the extracted signals.

According to an example, the method may comprise receiving, by the first circuitry, signals of a transmitting frequency range of the first frequency band, identifying, based on the signals of the second frequency band, a location of the electronic device, and adjusting, based on the location of the electronic device, an offset related to the signals of the transmitting frequency range among the first frequency band.

According to an example, the second frequency band is between the transmitting frequency range of the first frequency band and the receiving frequency range of the first frequency band.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
at least one processor including processing circuitry;
a radio frequency (RF) transceiver coupled with the at least one processor;
a radio frequency frontend (RFFE) circuit coupled with the RF transceiver;
an antenna;
extraction circuitry disposed between the RFFE circuit and the antenna, wherein the extraction circuitry is configured to
pass through signals obtained from the RFFE circuit, and
among signals received through the antenna, extract signals of a receiving frequency range among a first frequency band for satellite communication and a second frequency band for global navigation satellite system (GNSS) communication; and
separation circuitry for separating, among the signals obtained from the extraction circuitry, the signals of the receiving frequency range of the first frequency band and the signals of the second frequency band.

2. The electronic device of claim 1, wherein the separation circuitry further comprises a divider branching an input path into a first branch and a second branch.

3. The electronic device of claim 1, wherein the separation circuitry further comprises switch circuitry for connecting an input path to one of a first end and a second end.

4. The electronic device of claim 2, wherein the separation circuitry further comprises:
a first filter passing through the signals of the receiving frequency range of the first frequency band, and
a second filter passing through the signals of the second frequency band,
wherein the first filter is connected to the first branch, and
wherein the second filter is connected to the second branch.

5. The electronic device of claim 4, wherein the electronic device further comprises a low noise amplifier disposed between the separation circuitry and the extraction circuitry, and
wherein the low noise amplifier is configured to amplify the signals of the receiving frequency range of the first frequency band and the signals of the second frequency band.

6. The electronic device of claim 1, wherein the signals obtained from the RFFE circuit comprise signals of a transmitting frequency range among the first frequency band.

7. The electronic device of claim 6, wherein the electronic device further comprises a filter for passing through the signals of the transmitting frequency range among the first frequency band.

8. The electronic device of claim 7, wherein the RFFE circuit is configured to output the signals of the transmitting frequency range among the first frequency band and signals of a third frequency band for communication network, obtained from the filter.

9. The electronic device of claim 8, wherein the at least one processor is configured to:
identify, based on the signals of the second frequency band, a location of the electronic device, and
adjust, based on the location of the electronic device, an offset related to the signals of the transmitting frequency range among the first frequency band.

10. The electronic device of claim 6, wherein the second frequency band is between the transmitting frequency range of the first frequency band and the receiving frequency range of the first frequency band.

11. An electronic device comprising:
at least one processor including processing circuitry;
a radio frequency (RF) transceiver coupled with the at least one processor;
a radio frequency frontend (RFFE) circuit coupled with the RF transceiver; and
an antenna,
wherein the RFFE circuit comprises:
extraction circuitry disposed between the RFFE circuit and the antenna, wherein the extraction circuitry is configured to:
pass through signals to be transmitted through the antenna, and
among the signals received through the antenna, extract signals of a receiving frequency range among a first frequency band for satellite communication and a second frequency band for global navigation satellite system (GNSS) communication; and
separation circuitry for separating, among the signals obtained from the extraction circuitry, the signals of the receiving frequency range of the first frequency band and the signals of the second frequency band.

12. The electronic device of claim 11, wherein the separation circuitry further comprises a divider branching an input path into a first branch and a second branch.

13. The electronic device of claim 11, wherein the separation circuitry further comprises switch circuitry for connecting an input path to one of a first end and a second end.

14. The electronic device of claim 12, wherein the separation circuitry comprises:
a first filter passing through the signals of the receiving frequency range of the first frequency band, and
a second filter passing through the signals of the second frequency band,
wherein the first filter is connected to the first branch, and
wherein the second filter is connected to the second branch.

15. The electronic device of claim 14, wherein the RFFE circuit further comprises a low noise amplifier disposed between the separation circuitry and the extraction circuitry, and
wherein the low noise amplifier is configured to amplify the signals of the receiving frequency range of the first frequency band and the signals of the second frequency band.
